# EUROPÄISCHE PATENTSCHRIFT

(11) **EP 3 614 864 B1**
(45) Veröffentlichungstag und Bekanntmachung des Hinweises auf die Patenterteilung: **23.06.2021**
(21) Anmeldenummer: 18724771.3
(22) Anmeldetag: 23.04.2018
(51) Int. Cl.: A23L 29/206, A23L 29/256, A23L 19/00

(54) **VEGANES LEBENSMITTEL**
VEGAN FOODSTUFF
ALIMENT VÉGÉTALIEN

(30) Priorität: 25.04.2017 DE 102017003969
(43) Veröffentlichungstag der Anmeldung: 04.03.2020
(73) Patentinhaber: Hochschule Fulda, 36037 Fulda (DE)
(72) Erfinder: SCHMITT, Joachim, 63768 Hösbach (DE); LANGENDÖRFER, Lena, 97657 Langenleiten (DE); MÜNKEL, Maike, 36160 Dipperz (DE); SALEWSKI, Gina, 26135 Oldenburg (DE); SCHÄFER, Ralf, 36041 Fulda (DE)
(74) Vertreter: Kador & Partner PartG mbB
(86) Internationale Anmeldenummer: PCT/DE2018/000111
(87) Internationale Veröffentlichungsnummer: WO 2018/196896

(56) Entgegenhaltungen:
- EP-A1- 2 594 143
- WO-A1-91/01650
- WO-A1-2016/110513
- DE-A1-102011 052 204
- US-A- 6 146 683
- DATABASE GNPD [Online] MINTEL; 1. Dezember 2006 (2006-12-01), Mintel Group Ltd.: "Vegetable Spread with Aubergines", XP002782209, Database accession no. 619344
- DATABASE GNPD [Online] MINTEL; 1. Dezember 2005 (2005-12-01), Mintel Group Ltd.: "Pepper Jam", XP002782210, Database accession no. 3670139

## Beschreibung

Die vorliegende Erfindung betrifft ein veganes Lebensmittel, die Herstellung dieses Lebensmittels sowie das Lebensmittel erhältlich mittels dieses Verfahrens.

In der heutigen Gesellschaft nimmt ausgewogene und gesunde Ernährung eine immer wichtigere Stellung ein. Des Weiteren möchten sich viele Verbraucher aus mannigfaltigen Gründen vegan ernähren. Jedoch greifen viele Verbraucher im Berufsalltag und dem damit einhergehenden Zeitdruck auf Fertigprodukte zurück, die schnell zubereitet werden können.

Diese Produkte garantieren jedoch aufgrund ihres hohen Kohlenhydrat- und/oder Fettgehalts keine ausgewogene und gesunde Ernährung. Viele solcher Produkte sprechen den Verbraucher wenig an, da diese oft nicht sehr schmackhaft und optisch nicht ansprechend sind.

WO 9101650 offenbart ein pflanzliches Nahrungsmittel, welches insbesondere zur Verwendung als Aufschnitt geeignet ist, sowie ein Verfahren zur Herstellung desselben.

DE 102011052204 A1 offenbart eine kalorienarme vegetarische Wurst für Tiere, umfassend in einen Kunstdarm gefülltes Gemüse und/oder Obst, Alginat, und Wasser, ein Nahrungsergänzungstierfutter zu der Wurst, insbesondere in Pellet-, Biskuit- oder Knochenform, das aus Entenleber, Rind, Wild, Pferd, Lamm, Geflügel oder Fisch stammt und überwiegend gefriergetrocknetes tierisches Protein umfasst, Verfahren zur Herstellung der Wurst und des Nahrungsergänzungstierfutters sowie Verfahren zum Füttern eines Tiers.

Die WO 2016/110513 offenbart Lebensmittelprodukte insbesondere vom Typ "Schwammkuchen" oder "Festschaum". Hierbei handelt es sich um sog. molekulare Küche, d.h. die Intention des offenbarten Verfahrens liegt darin Speisen mit geringer Dichte zu erzeugen.

US 6,146,683 offenbart eine pikante Gemüsezubereitung, die bei Raumtemperatur lagerbar ist.

Weitere vegane Lebensmittel, insbesondere Brotaufstriche, sind bekannt und im Einzelhandel erhältlich.

Allerdings ist ein Großteil der Fertigprodukte entweder warm oder kalt zu verzehren, jedoch nicht beides, so dass die Verbraucher Fertigprodukte als fad und öde wahrnehmen. Dies gilt insbesondere für Brotaufstriche, die in der Regel nur kalt verzehrt und entweder in Scheiben auf das Brot oder Gebäck gelegt oder darauf gestrichen werden können.

Der vorliegenden Erfindung liegt daher die Aufgabe zugrunde, ein veganes und kalorienarmes Lebensmittel mit einem schmackhaften Aroma bereitzustellen, welches temperaturabhängig schnittfest und streichbar und somit abwechslungsreich ist. Überraschenderweise wurde festgestellt, dass ein veganes Lebensmittel, das durch ein Verfahren umfassend die Schritte
(i) Bereitstellen eines Gemüsemuses, wobei das Gemüsemus 80 bis 90 Gew.% mindestens eines Gemüses bezogen auf das Gesamtgewicht des Lebensmittels aufweist,
(ii) Hinzugeben mindestens eines Hydrokolloids zum Gemüsemus, um eine Mischung zu erhalten, wobei die Menge des mindestens einen Hydrokolloids 1 bis 2,5 Gew.% bezogen auf das Gesamtgewicht des Lebensmittels beträgt und wobei das mindestens eine Hydrokolloid Agar-Agar ist, und
(iii) Erwärmen der Mischung auf eine Temperatur von 70 bis 120 °C für 0,5 bis 10 min;
erhältlich ist, besonders schmackhaft, optisch ansprechend und ferner in Abhängigkeit von der Temperatur schnittfest und streichbar beziehungsweise fließfähig und somit abwechslungsreich ist.

Daher richtet sich die vorliegende Erfindung in einem ersten Aspekt auf ein Verfahren zur Herstellung eines veganen Lebensmittels umfassend die Schritte
(i) Bereitstellen eines Gemüsemuses, wobei das Gemüsemus 80 bis 90 Gew.% mindestens eines Gemüses bezogen auf das Gesamtgewicht des Lebensmittels aufweist,
(ii) Hinzugeben mindestens eines Hydrokolloids zum Gemüsemus, um eine Mischung zu erhalten, wobei die Menge des mindestens einen Hydrokolloids 1 bis 2,5 Gew.% bezogen auf das Gesamtgewicht des Lebensmittels beträgt und wobei das mindestens eine Hydrokolloid Agar-Agar ist, und
(iii) Erwärmen der Mischung auf eine Temperatur von 70 bis 120 °C für 0,5 bis 10 min.

In einem weiteren Aspekt richtet sich die Erfindung auf ein veganes Lebensmittel erhältlich nach dem erfindungsgemäßen Verfahren.

Diese und weitere Aspekte, Merkmale und Vorteile der Erfindung werden für den Fachmann aus dem Studium der folgenden detaillierten Beschreibung und Ansprüche ersichtlich. Dabei kann jedes Merkmal aus einem Aspekt der Erfindung in jedem anderen Aspekt der Erfindung eingesetzt werden. Ferner ist es selbstverständlich, dass die hierin enthaltenen Beispiele die Erfindung beschreiben und veranschaulichen sollen, diese aber nicht einschränken und insbesondere die Erfindung nicht auf diese Beispiele beschränkt ist. Alle Prozentangaben sind, sofern nicht anders angegeben, Gewichts-%. Numerische Bereiche, die in dem Format "von x bis y" angegeben sind, schließen die genannten Werte ein. Wenn mehrere bevorzugte numerische Bereiche in diesem Format angegeben sind, ist es selbstverständlich, dass alle Bereiche, die durch die Kombination der verschiedenen Endpunkte entstehen, ebenfalls erfasst werden.

"Mindestens ein", wie hierin verwendet, bezieht sich auf 1 oder mehr, beispielsweise 1, 2, 3, 4, 5, 6, 7, 8, 9 oder mehr. Im Zusammenhang mit Bestandteilen der hierin beschriebenen Zusammensetzungen bezieht sich diese Angabe nicht auf die absolute Menge an Molekülen sondern auf die Art des Bestandteils. "Mindestens ein Gemüse" bedeutet daher beispielsweise ein oder mehrere Gemüse, d.h. eine oder mehrere verschiedene Arten von Gemüse. Zusammen mit Mengenangaben beziehen sich die Mengenangaben auf die Gesamtmenge der entsprechend bezeichneten Art von Bestandteil, wie bereits oben definiert.

Das hierin beschriebene vegane Lebensmittel umfasst 1 bis 2,5 Gew.%, bevorzugter 1,3 bis 2,2 Gew.%, noch bevorzugter von 1,3 bis 1,5 Gew.%, besonders bevorzugt 1,5 Gew.% mindestens eines Hydrokolloids bezogen auf das Gesamtgewicht des Lebensmittels. Unter "Hydrokolloiden" werden natürliche oder synthetische Polymere verstanden, die in wässrigen Systemen Gele oder hochviskose Lösungen bilden. Das Hydrokolloid ist bevorzugt ausgewählt aus der Gruppe bestehend aus Alginsäure und deren Salze, Agar-Agar, Carrageen, Euchema-Algen, Johannisbrotkernmehl, Guarkernmehl, Traganth, Gummi arabicum, Xanthan, Karayagummi, Tarakernmehl, Gellan, Konjak, Pektin, kaltquellende Stärke, insbesondere aus Mais, Kartoffel oder Weizen, native Stärke und Mischungen davon. Im vorliegenden Fall ist das Hydrokolloid Agar-Agar. Es hat sich herausgestellt, dass bei einem Gewichtsbereich von kleiner 0,1 Gew.% das Lebensmittel auseinander fällt und in einem Bereich oberhalb von 3 Gew.% das Lebensmittel porös ist. Es wurde überraschenderweise gefunden, dass das Lebensmittel mit Agar-Agar in den offenbarten Gewichtsbereichen eine besonders gute Textur aufweist.

Ferner beinhaltet das erfindungsgemäße Lebensmittel 80 bis 90 Gew.%, bevorzugt 83 bis 90 Gew.% und bevorzugter 84 bis 89 Gew.% mindestens eines Gemüses bezogen auf das Gesamtgewicht des Lebensmittels. "Gemüse", wie hierin verwendet, bezieht sich auf alle Arten von essbaren Pflanzen oder Pflanzenteile, welche kein Obst und/oder keine Nüsse sind. Diese sind als solches bereits im Stand der Technik als Lebensmittel bekannt. Erfindungsgemäß kann Fruchtgemüse, Knollengemüse, Blütengemüse und Salat verwendet werden.

Als Fruchtgemüse sind insbesondere Gurken (*Cucumis L.),* Kürbisse und Zucchini (*Cucurbita*); Tomate (*Solanum lycopersicum L.*); Tomatillo (*Physalis philadelphica*); Paprika, Peperoni und Chili (*Capsicum L*.); Amaranth (*Amaranthus L.*); Aubergine (*Solanum melongena*) und Avocado (*Persea americana MILL*.) geeignet.

Ferner kann auch Knollengemüse wie Karotte (*Daucus carota* subsp. *sativus*); Rote Bete (*Beta vulgaris subsp. vulgaris*), Wasabi (*Wasabia japonica MATSUM*.); Kartoffel (*Solanum tuberosum L.*); und Süßkartoffel (*Ipomoea batatas L*.) verwendet werden.

Des Weiteren ist Blütengemüse wie Artischocke (*Cynara scolymus*); Zucchini (*Curcubita pepo subsp. pepo convar. giromontiina*); Blumenkohl (*Brassica oleracea var. botrytis L.*); Brokkoli (*Brassica oleracea var. italica Plenck*); und Romanesco (*Brassica oleracea convar. botrytis var. botrytis*) als Gemüse geeignet.

Als Gemüse kann Salat wie gewöhnlicher Löwenzahn (*Taraxacum sect.* R*uderalia*), Rauke (*Diplotaxis tenuifolia* oder *Eruca sativa*), Mangold (*Beta vulgaris subsp. vulgaris*), Spinat (*Spinacia oleracea L*.)*,* Wasserspinat (*Ipomoea aquatica FORSSK.*), Brunnenkresse (*Nasturtium officinale R.BR.*), Indischer Spinat (*Basella alba*), und Neuseelandspinat (*Tetragonia tetragonioides*) verwendet werden.

Ferner ist gemäß der Erfindung Mais (*Zea mays L.*) ebenfalls ein Gemüse.

Das Gemüse kann roh, gegart öder gekocht, zerkleinert, püriert oder als Ganzes Gemüse eingesetzt werden.

In einer besonderen Ausführungsform umfasst das Lebensmittel 31 bis 71 Gew.%, bevorzugt 41 bis 61 Gew.%, besonders bevorzugt 51 Gew.% Karotte, 1 bis 40 Gew.%, bevorzugt 10 bis 30 Gew.%, besonders bevorzugt 20 Gew.% Paprika, 1 bis 38 Gew.%, bevorzugt 8 bis 28 Gew.%, besonders bevorzugt 18 Gew.% Mais und 0,1 bis 3 Gew.%, bevorzugt 1 bis 2,5 Gew.%, bevorzugter 1,3 bis 2,2 Gew.%, noch bevorzugter von 1,3 bis 1,5 Gew.%, besonders bevorzugt 1,5 Gew.% Agar-Agar bezogen auf das Gesamtgewicht des Lebensmittels.

In einer weiteren bevorzugten Ausführungsform beinhaltet das vegane Lebensmittel 36 bis 76 Gew.%, bevorzugt 46 bis 66 Gew.%, besonders bevorzugt 56 Gew.% Spinat, 1 bis 38 Gew.%, bevorzugt 8 bis 28 Gew.%, besonders bevorzugt 28 Gew.% Mais und 0,1 bis 3 Gew.%, bevorzugt 1 bis 2,5 Gew.%, bevorzugter 1,3 bis 2,2 Gew.%, noch bevorzugter von 1,3 bis 1,5 Gew.%, besonders bevorzugt 1,5 Gew.% Agar-Agar bezogen auf das Gesamtgewicht des Lebensmittels. Es hat sich herausgestellt, dass die Kombinationen von verschiedenen Gemüsen in ihren jeweiligen Zusammensetzungen besonders schmackhafte und optisch ansprechende Lebensmittel sind.

Dem Lebensmittel nach der Erfindung können weitere Zutaten beigemengt werden. Hierzu gehören unter anderem Zucker und/oder Zuckerersatzstoffe. Als Zucker können alle dem Fachmann bekannten Zucker verwendet werden, die für den erfindungsgemäßen Zweck geeignet sind. Als Zuckerersatzstoffe können alle dem Fachmann bekannten Zuckerersatzstoffe, Zuckeraustauschstoffe, Süßstoffe und Zuckeralkohole verwendet werden, die für den erfindungsgemäßen Zweck geeignet sind.

In einer vorteilhaften Ausführungsform der vorliegenden Erfindung ist der Zucker ausgewählt aus der Gruppe bestehend aus Cellobiose, Isomaltose, Lactose, Maltose, Nigerose, Saccharose, Fructose, Galactose und Glucose. Vorzugsweise wird die Menge des eingesetzten Zuckers gering gehalten, um ein kalorienarmes Lebensmittel bereitzustellen.

In einer vorteilhaften Ausführungsform der vorliegenden Erfindung ist der Zuckerersatzstoff ausgewählt aus der Gruppe bestehend aus Stevia, Erythrit, Isomalt, Isomaltulose, Laktit, Maltit, Sorbit, Mannit, Xylit, Thaumatin, Sucralose, Saccharin, Neotam, Neohespiridin - DC, Cyclamat, Aspartam und Acesulfam.

Ferner kann als Zutat Natriumchlorid eingesetzt werden, welches für den Verzehr geeignet ist. Dieses Salz kann ferner Spuren anderer Verbindungen, wie beispielsweise Natriumnitrit, Kaliumnitrit, Kaliumiodat, Natriumfluorid und Folsäure enthalten. Erfindungsgemäß können sowohl Meersalz, Steinsalz als auch Mischungen davon verwendet werden. Ferner können als Zutaten Gewürze verwendet werden. "Gewürze", wie hierin beschrieben, beziehen sich auf Teile von Pflanzen, die aufgrund ihrer Geschmacks- und Geruchsstoffe als Zutat bei der Zubereitung von Lebensmitteln, Speisen und Getränken aller Art eingesetzt werden. Ferner werden im Allgemeinen Mischungen von Gewürze selbst als Gewürz bezeichnet wie beispielsweise Senf oder Wasabi. Nach der Erfindung können all dem Fachmann geeigneten Gewürze verwendet werden, die für den erfindungsgemäßen Zweck geeignet sind. Die Pflanzen bzw. Pflanzenteile können in frischer, in getrockneter und in bearbeiteter Form verwendet werden. Die Pflanzenteile können Blätter, Blüten oder Teile der Blüten, Rinde, Pflanzenwurzeln, Rhizome, Früchte, Samen und Säfte der Pflanzen sein. Es können auch einzelne Aromen der Pflanzen verwendet werden. Diese können beispielsweise synthetisch hergestellt sein. Die verwendeten Gewürze nach der Erfindung können sein, ohne auf diese beschränkt zu sein, Pfeffer, Safran, Kardamom, Zimt, Koriander, Thymian, Rosmarin, Oregano, Schnittlauch, Lorbeer, Zwiebeln, Knoblauch, Ingwer, Wacholderbeeren, Kapern, Gewürznelken, Salbei, Melisse, Minze, Muskatnuss, Paprika, Wachholderbeeren, Vanille, Kümmel, Anis, Kakao, Essig, Kokosmilch, Lakritze, Mandeln, Nelken, Senf, Curry, Chutney, Sojasauce, Zitronensaft, Gemüsebrühe und Wasabi. Ferner können auch etablierte Mischungen solcher Gewürze verwendet werden wie klare Gemüsebrühe oder Gewürzmischungen, die in der italienischen Küche häufig eingesetzt werden, so genannte italienische Kräuter. Bevorzugt wird das Lebensmittel mit Essig, Zucker, Zitronensaft und Gemüsebrühe gewürzt. Ferner kann das Lebensmittel auch mit Konservierungsmitteln versetzt werden wie beispielsweise Sorbinsäure, Sorbate, Benzoesäure, Benzoate und Acetate.

Das Lebensmittel liegt bei einer Temperatur von weniger als 40 °C in schnittfester Form vor. Bei einer Temperatur von 40 °C oder mehr ist das Lebensmittel streichbar. So kann das hierin beschriebene Lebensmittel unterhalb 40 °C beispielsweise in Scheiben geschnitten, auf Brot oder Gebäck gelegt und so verzehrt werden. Alternativ kann das Lebensmittel im schnittfesten Zustand in Scheiben geschnitten, auf das Brot gelegt und dieses zusätzlich erwärmt werden. Dies kann beispielsweise in einer Mikrowelle erfolgen. Das Lebensmittel kann alternativ auf eine Temperatur von 40 °C oder mehr erwärmt werden und so als Gemüseaufstrich verwendet werden. Auch besteht die Möglichkeit das vegane Lebensmittel zu Frittieren, um beispielsweise Gemüsechips zu erhalten. Ebenso kann das Lebensmittel eingefroren und später zur Verwendung wieder aufgetaut und erwärmt werden. Hierdurch stellt es ein lange haltbares, gut lagerbares veganes Lebensmittel dar.
Das hierin beschriebene Lebensmittel ist somit verschieden einsetzbar und stellt eine abwechslungsreiche Lebensmittelform für Verbraucher dar, die vegan und kalorienarm ist.

Die Erfindung beschreibt des Weiteren ein Verfahren zur Herstellung eines veganen Lebensmittels, das die folgenden Schritte umfasst:
(i) Bereitstellen eines Gemüsemuses, wobei das Gemüsemus 80 bis 90 Gew.% mindestens eines Gemüses bezogen auf das Gesamtgewicht des Lebensmittels aufweist,
(ii) Hinzugeben mindestens eines Hydrokolloids zum Gemüsemus, um eine Mischung zu erhalten, wobei die Menge des mindestens einen Hydrokolloids 1 bis 2,5 Gew.% bezogen auf das Gesamtgewicht des Lebensmittels beträgt und wobei das mindestens eine Hydrokolloid Agar-Agar ist, und
(iii) Erwärmen der Mischung auf eine Temperatur von 70 bis 120 °C, bevorzugt 90 bis 110 °C, besonders bevorzugt 100 °C für 0,5 bis 10 min, bevorzugt 1 bis 5 min, besonders bevorzugt 2 min.

Bei diesem Verfahren können alle dem Fachmann bekannten Vorrichtungen verwendet werden. Die vorgenannten Ausführungen zum veganen Lebensmittel gelten auch für das Verfahren und das vegane Lebensmittel, weiches durch das erfindungsgemäße Verfahren erhältlich ist.

Das Verfahren wird vorzugsweise batchweise durchgeführt. Falls nötig, wird in Schritt (i) das Gemüse gewaschen, geschält und geschnitten und in einem Kochgefäß vorgelegt. Das Gefäß ist heizbar und weist vorzugsweise ein integriertes Sieb im Auslauf, ein Rührwerk und eine Schneidvorrichtung auf. Optional wird das Gemüse mit Wasser versetzt und anschließend bei 100 °C für etwa 15 Minuten gekocht, bis die einzelnen Zutaten weich sind. In Schritt (i) wird vorzugsweise mindestens eine weitere Zutat hinzugegeben, wie sie hierin beschrieben sind. Diese können ausgewählt sein, ohne auf diese beschränkt zu sein, aus der Gruppe bestehend aus Essig, Zucker, Zitronensaft und klare Gemüsebrühe. Das Wasser wird nach Beendigung des vorherigen Prozesses abgelassen und in andere Gefäße überführt. Es kann für die nächste Charge oder für andere Produkte wie beispielsweise Soßen wiederverwendet werden. Alternativ kann es eingekocht und in das Mus gegeben werden. Die weich gekochten Zutaten werden mit der scharfen Rührseite fein zerschnitten und püriert, bis die gewünschte Textur erreicht ist.

Anschließend wird in Schritt (ii) Hydrokolloid und optional Gewürze hinzugegeben, um die Mischung zu erhalten. Vorzugsweise wird in diesem Schritt eine weitere Zutat ausgewählt aus der Gruppe bestehend aus Gewürze, Mais und Senf hinzugegeben. Diese Zutaten verleihen in nicht zerkleinerter Form dem Lebensmittel ein ansprechendes Aussehen. Vorzugsweise wird die Mischung gerührt.

Die Mischung wird anschließend in Schritt (iii) auf eine Temperatur von 70 bis 120 °C, bevorzugt 90 bis 110 °C, besonders bevorzugt 100 °C erwärmt und auf dieser Temperatur für 0,5 bis 10 min, bevorzugt 1 bis 5 min, besonders bevorzugt 2 min konstant gehalten. Dieser Prozessschritt garantiert die Tötung des Großteils der sich im Mus befindlichen Mikroorganismen und bewirkt das Lösen des Agar-Agars, so dass das Lebensmittel beim Abkühlen auf unter 40 °C schnittfest wird. Die Mischung weist nach dem Schritt (iii) bevorzugt einen pH-Wert von 3 bis 7, bevorzugter von 3 bis 6, noch bevorzugter von 3,5 bis 5,5, noch bevorzugter von 4 bis 5 und besonders bevorzugt von 4,5 auf.

Der pH-Wert ist für die Haltbarkeit des erfindungsgemäßen Produkts relevant. Insbesondere ist die Textur des erhaltenen Lebensmittels im angegebenen pH-Bereich vorteilhaft.
Das Lebensmittel kann vor dem Abkühlen vorzugsweise bei über 70 °C in eine Form gegeben werden, in der es erstarrt, beispielsweise in eine Kegelform, und verschlossen werden.

Des Weiteren beschreibt die Erfindung ein veganes Lebensmittel erhältlich nach dem hierin offenbarten Verfahren. Das Verfahren, insbesondere der Schritt (iii) gewährleistet, dass das Lebensmittel bei einer Temperatur von unter 40 °C eine gute Schnittfestigkeit aufweist, ohne zu hart zu sein. Oberhalb einer Temperatur von 40 °C ist das Lebensmittel gut streichbar beziehungsweise fließfähig.
In beiden Temperaturbereichen ist die Textur des veganen Lebensmittels sehr gut. Die Textur wird aufgrund des pH-Werts von 3 bis 7, bevorzugt von 3 bis 6, bevorzugter von 3,5 bis 5,5, noch bevorzugter von 4 bis 5 und besonders bevorzugt von 4,5 nochmals verbessert.

### Beispiele

### Beispiel 1: Rezeptur Karotte-Paprika

Zunächst wurden 321 kg gewaschene und zerkleinerte Karotten und 127 kg gewaschener, geschälter und geschnittener Paprika in einem doppelwandigen 4500 L Tank vorgelegt. Der Tank war mit einem integrierten Sieb im Auslauf, einem Rührwerk und einer Schneidvorrichtung ausgestattet. Das Gemüse wurde mit Wasser versetzt, 15 min bei einer Temperatur von 100 °C gerührt, bis die einzelnen Zutaten weichgekocht waren und anschließend püriert. Anschließend wurden 9,4 kg Agar-Agar, 113,9 kg Mais, 12,3 kg Senf, 8,4 kg Schnittlauch, 7,8 kg Petersilie, 7,6 kg Essig, 6,5 kg klare Gemüsebrühe, 5,4 kg Zucker, 5,1 kg Kräutermischung, 4,7 kg Zitronensaft und 0,8 kg Knoblauch hinzugegeben, um eine Mischung zu erhalten. Die Mischung wurde gerührt bis sie homogen war und anschließend bei einer Temperatur von 100 °C für eine Dauer von 2 min gerührt. Daraufhin wurde die Mischung bei einer Temperatur von über 70 °C abgefüllt. Das so erhaltene vegane Lebensmittel wies die in Tabelle 1 aufgezeigte Zusammensetzung auf.

**Tabelle 1: Karotte-Paprika**

| **Zutat** | **Menge [%]** |
|---|---|
| Karotte | 51,0 |
| Paprika | 20,2 |
| Mais | 18,1 |
| Senf | 1,9 |
| Agar-Agar | 1,5 |
| Schnittlauch | 1,3 |
| Petersilie | 1,2 |
| Essig | 1,2 |
| Klare Gemüsebrühe | 1,0 |
| Zucker | 0,9 |
| Italienische Kräuter (Rote Zwiebeln, Petersilie, Basilikum, grüner Knoblauch, Thymian, Oregano) | 0,8 |
| Zitronensaft | 0,8 |
| Knoblauch | 0,1 |

### Beispiel 2: Rezeptur Spinat-Mais

Zunächst wurden 352 kg gewaschener und zerkleinerter Spinat in einem doppelwandigen 4500 L Tank vorgelegt. Der Tank war mit einem integrierten Sieb im Auslauf, einem Rührwerk und einer Schneidvorrichtung ausgestattet. Der Spinat wurde mit Wasser versetzt, 15 min bei einer Temperatur von 100 °C gerührt, bis alles weichgekocht war und anschließend püriert. Anschließend wurden 9,4 kg Agar-Agar, 177 kg Mais, 12,3 kg Senf, 8,4 kg Schnittlauch, 7,8 kg Petersilie, 7,6 kg Essig, 6,5 kg klare Gemüsebrühe, 5,4 kg Zucker, 5,1 kg Kräutermischung, 4,7 kg Zitronensaft und 0,8 kg Knoblauch hinzugegeben, um eine Mischung zu erhalten. Die Mischung wurde gerührt bis sie homogen war und anschließend bei einer Temperatur von 100 °C für eine Dauer von 2 min gerührt. Daraufhin wurde die Mischung bei einer Temperatur von über 70 °C abgefüllt. Das so erhaltene vegane Lebensmittel wies die in Tabelle 2 aufgezeigte Zusammensetzung auf.

**Tabelle 2: Spinat-Mais**

| **Zutat** | **Menge [%]** |
|---|---|
| Spinat | 56,0 |
| Mais | 28,1 |
| Senf | 1,9 |
| Agar-Agar | 1,5 |
| Schnittlauch | 1,3 |
| Petersilie | 1,2 |
| Essig | 1,2 |
| Klare Gemüsebrühe | 1,0 |
| Zucker | 0,9 |
| Italienische Kräuter (Rote Zwiebeln, Petersilie, Basilikum, grüner Knoblauch, Thymian, Oregano) | 0,8 |
| Zitronensaft | 0,8 |
| Knoblauch | 0,1 |

Sofern in Tabelle 1 und Tabelle 2 die Summe der Zutaten nicht 100 % ergibt, handelt es sich bei der Differenz zu 100 % um Wasser, welches nicht separat aufgeführt wird.

Die in den Beispielen erhaltenen veganen Lebensmittel wiesen eine ansprechende Textur auf, die bei Raumtemperatur schnittfest und bei späterem Erhitzen wieder flüssig wurde. Durch die Addition von noch klein-stückigen Anteilen der beschriebenen Gemüse-Zutaten erhielten die veganen Lebensmittel eine ansprechende Optik.

## Patentansprüche

1. Verfahren zur Herstellung eines veganen Lebensmittels umfassend die Schritte
(i) Bereitstellen eines Gemüsemuses, wobei das Gemüsemus 80 bis 90 Gew.% mindestens eines Gemüses bezogen auf das Gesamtgewicht des Lebensmittels aufweist,
(ii) Hinzugeben mindestens eines Hydrokolloids zum Gemüsemus, um eine Mischung zu erhalten, wobei die Menge des mindestens einen Hydrokolloids 1 bis 2,5 Gew.% bezogen auf das Gesamtgewicht des Lebensmittels beträgt und wobei das mindestens eine Hydrokolloid Agar-Agar ist, und
(iii) Erwärmen der Mischung auf eine Temperatur von 70 bis 120 °C für 0,5 bis 10 min.

2. Verfahren nach Anspruch 1, wobei
(a) in Schritt (i) mindestens eine weitere Zutat ausgewählt aus der Gruppe bestehend aus Essig, Zucker, Zitronensaft und Gemüsebrühe hinzugegeben wird; und/oder
(b) in Schritt (ii) mindestens eine weitere Zutat ausgewählt aus der Gruppe bestehend aus Gewürze, Mais und Senf hinzugegeben wird.

3. Verfahren nach Anspruch 1 oder 2, wobei
die Mischung nach dem Schritt (iii) einen pH-Wert von 3 bis 7, bevorzugt von 3,5 bis 6, noch bevorzugter von 4 bis 5 aufweist.

4. Veganes Lebensmittel erhältlich nach einem der Ansprüche 1 bis 3.

5. Veganes Lebensmittel nach Anspruch 4 umfassend
(a) 1 bis 2,5 Gew.%, bevorzugter 1,3 bis 2,2 Gew.%, noch bevorzugter von 1,3 bis 1,5 Gew.%, besonders bevorzugt 1,5 Gew.% mindestens eines Hydrokolloids, wobei das mindestens eine Hydrokolloid Agar-Agar ist; und
(b) 80 bis 90 Gew.% und besonders bevorzugt 84 bis 89 Gew.% mindestens eines Gemüses ausgewählt aus der Gruppe bestehend aus Gurken, Kürbisse, Zucchini, Tomate, Tomatillo, Paprika, Peperoni, Chili, Amaranth, Aubergine, Avocado, Karotte, Rote Bete, Wasabi, Kartoffel, Süßkartoffel, Artischocke, Zucchini, Blumenkohl, Brokkoli, Romanesco, gewöhnlicher Löwenzahn, Rauke, Mangold, Spinat, Wasserspinat, Brunnenkresse, indischer Spinat, Neuseelandspinat und Mais
bezogen auf das Gesamtgewicht des Gemüseaufstrichs.

6. Veganes Lebensmittel nach Anspruch 4 oder 5, wobei
(a) das Lebensmittel 31 bis 71 Gew.%, bevorzugt 41 bis 61 Gew.%, besonders bevorzugt 51 Gew.% Karotte, 1 bis 40 Gew.%, bevorzugt 10 bis 30 Gew.%, besonders bevorzugt 20 Gew.% Paprika, 1 bis 38 Gew.%, bevorzugt 8 bis 28 Gew.%, besonders bevorzugt 18 Gew.% Mais und 1 bis 2,5 Gew.%, bevorzugter 1,3 bis 2,2 Gew.%, noch bevorzugter von 1,3 bis 1,5 Gew.%, besonders bevorzugt 1,5 Gew.% Agar-Agar umfasst bezogen auf das Gesamtgewicht des Gemüseaufstrichs; und/oder
(b) das Lebensmittel 36 bis 76 Gew.%, bevorzugt 46 bis 66 Gew.%, besonders bevorzugt 56 Gew.% Spinat, 1 bis 38 Gew.%, bevorzugt 8 bis 28 Gew.%, besonders bevorzugt 28 Gew.% Mais und 1 bis 2,5 Gew.%, bevorzugter 1,3 bis 2,2 Gew.%, noch bevorzugter von 1,3 bis 1,5 Gew.%, besonders bevorzugt 1,5 Gew.% Agar-Agar umfasst bezogen auf das Gesamtgewicht des Gemüseaufstrichs.

7. Veganes Lebensmittel nach einem der Ansprüche 4 oder 5 wobei
(a) das Lebensmittel 31 bis 71 Gew.%, bevorzugt 41 bis 61 Gew.%, besonders bevorzugt 51 Gew.% Karotte, 1 bis 40 Gew.%, bevorzugt 10 bis 30 Gew.%, besonders bevorzugt 20 Gew.% Paprika, 1 bis 38 Gew.%, bevorzugt 8 bis 28 Gew.%, besonders bevorzugt 18 Gew.% Mais und 1 bis 2,5 Gew.%, bevorzugter 1,3 bis 2,2 Gew.%, noch bevorzugter von 1,3 bis 1,5 Gew.%, besonders bevorzugt 1,5 Gew.% Agar-Agar umfasst bezogen auf das Gesamtgewicht des Lebensmittels; und/oder
(b) das Lebensmittel 36 bis 76 Gew.%, bevorzugt 46 bis 66 Gew.%, besonders bevorzugt 56 Gew.% Spinat, 1 bis 38 Gew.%, bevorzugt 8 bis 28 Gew.%, besonders bevorzugt 28 Gew.% Mais und 1 bis 2,5 Gew.%, bevorzugter 1,3 bis 2,2 Gew.%, noch bevorzugter von 1,3 bis 1,5 Gew.%, besonders bevorzugt 1,5 Gew.% Agar-Agar umfasst bezogen auf das Gesamtgewicht des Lebensmittels;
(c) das Lebensmittel ein Gemüseaufstrich ist; und/oder
(d) das Lebensmittel ein Brotbelag ist.

## Claims

1. Method of preparing a vegan foodstuff comprising the steps of
(i) providing a vegetable mash, wherein the vegetable mash comprises 80 to 90 wt.% of at least one vegetable based on the total weight of the foodstuff;
(ii) adding at least one hydrocolloid to the vegetable mash to obtain a mixture, wherein the amount of the at least one hydrocolloid is 1 to 2.5 wt.% based on the total weight of the foodstuff and wherein the at least one hydrocolloid is agar-agar; and
(iii) heating the mixture at a temperature of 70 to 120 °C for 0.5 to 10 minutes.

2. Method of claim 1, wherein
(a) in step (i), at least one further ingredient selected from the group consisting of vinegar, sugar, lemon juice and vegetable stock is added; and/or
(b) in step (ii), at least one further ingredient selected from the group consisting of spices, maize and mustard is added.

3. Method according to claim 1 or 2, wherein
the mixture after step (iii) has a pH of from 3 to 7, preferably from 3.5 to 6, more preferably from 4 to 5.

4. A vegan foodstuff obtainable according to any one of claims 1 to 3.

5. Vegan foodstuff according to claim 4 comprising:
(a) from 1 to 2.5 wt.%, more preferably from 1.3 to 2.2 wt.%, still more preferably from 1.3 to 1.5 wt.%, particularly preferably 1.5 wt.% of at least one hydrocolloid, wherein the at least one hydrocolloid is agar-agar; and
(b) from 80 to 90 wt.%, and particularly preferably from 84 to 89 wt.% of at least one vegetable selected from the group consisting of cucumber, pumpkin, zucchini, tomato, tomatillo, capsicum, chilli, amaranth, eggplant, avocado, carrot, beetroot, wasabi, potato, sweet potato, artichoke, courgette, cauliflower, broccoli, romanesco, common dandelion, rocket, chard, spinach, water spinach, watercress, Indian spinach, New Zealand spinach and maize
based on the total weight of the vegetable spread.

6. Vegan foodstuff according to claim 4 or 5, wherein
(a) the foodstuff comprises 31 to 71 wt.%, preferably 41 to 61 wt.%, more preferably 51 wt.% carrot, 1 to 40 wt.%, preferably 10 to 30 wt.%, more preferably 20 wt.% of capsicum, 1 to 38 wt.%, preferably 8 to 28 wt.%, more preferably 18 wt.% of maize, and 1 to 2.5 wt.%, more preferably 1.3 to 2.2 wt.% of maize, still more preferably from 1.3 to 1.5 wt.%, particularly preferably 1.5 wt.% of agar-agar based on the total weight of the vegetable spread; and/or
(b) the foodstuff comprises from 36 to 76 wt.%, preferably from 46 to 66 wt.%, more preferably 56 wt.% of spinach, from 1 to 38 wt.%, preferably from 8 to 28 wt.%, more preferably from 28 wt.% of maize and 1 to 2.5 wt.%, more preferably 1.3 to 2.2 wt.%, even more preferably from 1.3 to 1.5 wt.%, more preferably 1.5 wt.% agar-agar based on the total weight of the vegetable spread.

7. Vegan foodstuff according to any one of claims 4 or 5, wherein
(a) the foodstuff comprises 31 to 71 wt.%, preferably 41 to 61 wt.%, more preferably 51 wt.% of carrot, 1 to 40 wt.%, preferably 10 to 30 wt.%, particularly preferably 20 wt.% of capsicum, from 1 to 38 wt.%, preferably from 8 to 28 wt.%, particularly preferably 18 wt.% of maize and from 1 to 2.5 wt.%, more preferably from 1.3 to 2.2 wt.%, still more preferably from 1.3 to 1.5 wt.%, particularly preferably 1.5 wt.% of agar-agar
based on the total weight of the foodstuff; and/or
(b) the foodstuff comprises from 36 to 76 wt.%, preferably from 46 to 66 wt.%, more preferably 56 wt.% of spinach, from 1 to 38 wt.%, preferably from 8 to 28 wt.%, more preferably 28 wt.% of maize and from 1 to 2.5 wt. %, more preferably 1.3 to 2.2 wt.%, still more preferably from 1.3 to 1.5 wt.%, particularly preferably 1.5 wt.% of agar-agar based on the total weight of the foodstuff;
(c) the foodstuff is a vegetable spread; and/or (d) the foodstuff is a bread topping.

## Revendications

1. Procédé de fabrication d'un produit alimentaire végétalien comprenant les étapes
(i) fourniture d'une purée de légumes, la purée de légumes comprenant 80 à 90 % en poids d'au moins un légume par rapport au poids total du produit alimentaire,
(ii) ajout d'au moins un hydrocolloïde à la purée de légumes, afin d'obtenir un mélange, la quantité de l'au moins un hydrocolloïde étant de 1 à 2,5 % en poids par rapport au poids total du produit alimentaire et l'au moins un hydrocolloïde étant l'agar-agar, et
(iii) chauffage du mélange à une température de 70 à 120 °C pendant 0,5 à 10 min.

2. Procédé selon la revendication 1, dans lequel
(a) dans l'étape (i) au moins un ingrédient supplémentaire choisi dans le groupe constitué par le vinaigre, le sucre, le jus de citron et le bouillon de légumes est ajouté ; et/ou
(b) dans l'étape (ii) au moins un ingrédient supplémentaire choisi dans le groupe constitué par les épices, le maïs et la moutarde est ajouté.

3. Procédé selon la revendication 1 ou 2, dans lequel
le mélange présente après l'étape (iii) un pH de 3 à 7, de préférence de 3,5 à 6, de manière encore davantage préférée de 4 à 5.

4. Produit alimentaire végétalien pouvant être obtenu selon l'une quelconque des revendications 1 à 3.

5. Produit alimentaire végétalien selon la revendication 4, comprenant
(a) 1 à 2,5 % en poids, de manière davantage préférée 1,3 à 2,2 % en poids, de manière encore davantage préférée de 1,3 à 1,5 % en poids, de manière particulièrement préférée 1,5 % en poids d'au moins un hydrocolloïde, l'au moins un hydrocolloïde étant l'agar-agar ; et
(b) 80 à 90 % en poids et de manière particulièrement préférée 84 à 89 % en poids d'au moins un légume choisi dans le groupe constitué par le concombre, la courge, la courgette, la tomate, le tomatillo, le poivron, le piment doux, le piment, l'amarante, l'aubergine, l'avocat, la carotte, la betterave, le wasabi, la pomme de terre, la patate douce, l'artichaut, la courgette, le chou-fleur, le brocoli, le chou romanesco, le pissenlit commun, la roquette, la bette à carde, l'épinard, le liseron d'eau, le cresson, l'épinard de Malabar, l'épinard de Nouvelle-Zélande et le maïs par rapport au poids total de la pâte à tartiner de légumes.

6. Produit alimentaire végétalien selon la revendication 4 ou 5, dans lequel
(a) le produit alimentaire comprend 31 à 71 % en poids, de préférence 41 à 61 % en poids, de manière particulièrement préférée 51 % en poids de carotte, 1 à 40% en poids, de préférence 10 à 30% en poids, de manière particulièrement préférée 20 % en poids de poivron, 1 à 38 % en poids, de préférence 8 à 28 % en poids, de manière particulièrement préférée 18 % en poids de maïs et 1 à 2,5 % en poids, de manière davantage préférée 1,3 à 2,2 % en poids, de manière encore davantage préférée 1,3 à 1,5 % en poids, de manière particulièrement préférée 1,5 % en poids d'agar-agar par rapport au poids total de la pâte à tartiner de légumes ; et/ou
(b) le produit alimentaire comprend 36 à 76 % en poids, de préférence 46 à 66 % en poids, de manière particulièrement préférée 56 % en poids d'épinard, 1 à 38 % en poids, de préférence 8 à 28 % en poids, de manière particulièrement préférée 28 % en poids de maïs et 1 à 2,5 % en poids, de manière davantage préférée 1,3 à 2,2% en poids, de manière encore davantage préférée 1,3 à 1,5 % en poids, de manière particulièrement préférée 1,5 % en poids d'agar-agar
par rapport au poids total de la pâte à tartiner de légumes.

7. Produit alimentaire végétalien selon l'une quelconque des revendications 4 ou 5, dans lequel
(a) le produit alimentaire comprend 31 à 71 % en poids, de préférence 41 à 61 % en poids, de manière particulièrement préférée 51 % en poids de carotte, 1 à 40% en poids, de préférence 10 à 30% en poids, de manière particulièrement préférée 20 % en poids de poivron, 1 à 38 % en poids, de préférence 8 à 28 % en poids, de manière particulièrement préférée 18 % en poids de maïs et 1 à 2,5 % en poids, de manière davantage préférée 1,3 à 2,2 % en poids, de manière encore davantage préférée 1,3 à 1,5 % en poids, de manière particulièrement préférée 1,5 % en poids d'agar-agar par rapport au poids total du produit alimentaire ; et/ou
(b) le produit alimentaire comprend 36 à 76 % en poids, de préférence 46 à 66 % en poids, de manière particulièrement préférée 56 % en poids d'épinard, 1 à 38 % en poids, de préférence 8 à 28 % en poids, de manière particulièrement préférée 28 % en poids de maïs et 1 à 2,5 % en poids, de manière davantage préférée 1,3 à 2,2% en poids, de manière encore davantage préférée 1,3 à 1,5 % en poids, de manière particulièrement préférée 1,5 % en poids d'agar-agar par rapport au poids total du produit alimentaire ;
(c) le produit alimentaire est une pâte à tartiner de légumes ; et/ou
(d) le produit alimentaire est une garniture de tartine.
